# EUROPÄISCHE PATENTSCHRIFT

(11) **EP 2 052 047 B1**
(45) Veröffentlichungstag und Bekanntmachung des Hinweises auf die Patenterteilung: **31.03.2010**
(21) Anmeldenummer: 07802488.2
(22) Anmeldetag: 03.08.2007
(51) Int. Cl.: C09J 153/02, B32B 7/12

(54) **SELBSTKLEBEMASSE AUS HYDRIERTEN BLOCKCOPOLYMEREN UND DARAUS HERGESTELLTE SCHUTZFOLIE FÜR GLATTE UND RAUE OBERFLÄCHEN**
SELF-ADHESIVE MATERIAL OF HYDROGENATED BLOCK COPOLYMERS AND PROTECTIVE FILM FOR SMOOTH AND ROUGH SURFACES PRODUCED THEREOF
MATIÈRE AUTOCOLLANTE EN COPOLYMÈRES À BLOCS HYDROGÉNÉS ET FILM DE PROTECTION POUR SURFACES LISSES ET RUGUEUSES RÉALISÉ AVEC CETTE DERNIÈRE

(30) Priorität: 10.08.2006 DE 102006037627
(43) Veröffentlichungstag der Anmeldung: 29.04.2009
(73) Patentinhaber: TESA SE, 20253 Hamburg (DE)
(72) Erfinder: BÖHM, Nicolai, 20357 Hamburg (DE); JANNING, Michael, 48161 Münster (DE); HAGEMANN, Andreas, 46414 Rhede (DE); BOCCUTO, Domenico, 48703 Stadtlohn (DE)
(86) Internationale Anmeldenummer: PCT/EP2007/058059
(87) Internationale Veröffentlichungsnummer: WO 2008/017641

(56) Entgegenhaltungen:
- EP-A- 1 108 771
- US-A- 5 492 943
- US-A1- 2002 177 669
- US-A1- 2004 253 464
- US-B1- 6 613 381

## Beschreibung

Die Erfindung betrifft eine Selbstklebemasse aus hydrierten Blockcopolymeren sowie die Verwendung derselben in Schutzfolien, die eine sichere Haftung auf glatten und rauen Oberflächen erzielen und von diesen leicht und selbst nach UV-Belastung rückstandsfrei entfernbar sind.

Gestiegene Ansprüche an die Gestaltung von Gebrauchsgegenständen bringen fortlaufend neue empfindliche Oberflächen hervor, und der moderne Verbraucher erwartet beim Erwerb ein beschädigungsfreies Produkt.
Die empfindlichen Oberflächen vieler Konsumgüter werden daher mit Oberflächenschutzfolien geschützt, die diese vor leichten mechanischen Einwirkungen wirkungsvoll schützen und wertmindernde Zerkratzungen sowie Mattierungen verhindern helfen. Oberflächenschutzfolien bestehen in der Regel aus einer Trägerfolie, die die eigentliche Schutzwirkung entfaltet, und einer Selbstklebemasse, die die Folie einerseits von Anfang an sicher auf dem zu schützenden Gegenstand fixiert, andererseits eine leichte und spurlose Wiederablösbarkeit sicherstellen muss.
Die Bedingungen, denen die geschützte Oberfläche und die Schutzfolie ausgesetzt sind, können je nach Gegenstand und Zweck sehr verschieden sein. In der Praxis reichen diese von einer nur wenige Stunden dauernden Beklebungszeit unter normalen Umgebungsbedingungen, etwa während der Montage, bis hin zu monatelangen Beklebungszeiten unter erschweren Bedingungen, darunter UV-Belastung oder hohe Luftfeuchtigkeit.

Die nötige Klebkraft der Schutzfolie hängt vom Substratmaterial und von dessen Oberflächenbeschaffenheit ab. Diese kann glänzend oder matt respektive glatt oder verschiedenartig strukturiert sein. Kein Oberflächenschutzprodukt deckt alle Anforderungen ab. Daraus erklärt sich die Vielzahl der angebotenen Oberflächenschutzfolienprodukte.

Dominierend sind Schutzfolien mit einem Träger aus Polyolefinen und Selbstklebemassen aus Acrylsäureesterpolymeren, sowohl aus Lösung als auch aus wässriger Dispersion aufgebracht. Die Acrylsäureesterpolymere lassen sich unterschiedlich klebrig einstellen und funktionieren für viele Einsatzzwecke auch ganz ordentlich. Generell neigen die eher polaren Acrylsäureesterpolymere aber zum Aufziehen auf den Haftgrund, also zur Steigerung der Haftkraft auf dem Substrat mit der Zeit gegenüber dem Ausgangsniveau.
Ebenfalls verbreitet sind schwarz/weiße Polyolefinfolien, die außen weiß und darunter schwarz eingefärbt und meistens mit Naturkautschukselbstklebemassen kombiniert sind. Diese lichtundurchlässige Folie soll die lichtempfindliche Naturkautschukselbstklebemasse vor lichtbedingter Zersetzung schützen, die zwangsläufig zu nicht tolerierbaren Klebmasserückständen führen würde.
Dieser Schutzfolientyp kommt insbesondere dann zum Einsatz, wenn Acrylsäureesterpolymere nicht geeignet sind, also deren polare Natur zu einer starken Wechselwirkung mit dem Haftgrund führt, was zum Beispiel häufig auf PVC, etwa Fensterprofilen, der Fall ist.
Generell sind Naturkautschukselbstklebemassen die geeigneteren Selbstklebemassen für den Oberflächenschutz, da sie unpolar sind und weniger zum Aufziehen neigen als Acrylsäureesterpolymere. Ihr wesentlicher Nachteil ist die Lichtlabilität, die nur mit einer lichtdichten, aber dafür weniger attraktiven Folie ausgeglichen werden kann. Aus optischen oder auch praktischen Gründen ist eine transparente Schutzfolie mitunter wünschenswerter, weil die abgedeckte Fläche betrachtet werden kann.

Daher wäre in vielen Fällen eine Folie vorteilhaft, die einen transparenten Träger mit einer unpolaren Naturkautschukselbstklebemasse kombiniert.

Ein Ausweg kann die Verwendung von Synthesekautschuken sein, die anders als. Naturkautschuk zum Teil auch in hydrierter, also lichtstabilerer Form erhältlich sind.

Dennoch ist Naturkautschuk nicht direkt durch einen Synthesekautschuk austauschbar, Synthesekautschukmassen müssen insgesamt anders formuliert werden.

Ein Versuch in diese Richtung ist in der WO 03/018702 A1 offengelegt, wo bevorzugt Styrolblockcopolymere, die auch hydriert sein können, zusammen mit Klebharzen und polymerem Weichmacher aus Polyisobutylen, wobei dieser eine Erweichungstemperatur unter 25 °C haben muss, also bei Raumtemperatur flüssig ist, eingesetzt werden. Zwar funktioniert die Schutzfolie wie ausgelobt tatsächlich auf einigen lackierten Oberflächen. Dennoch werden auf vielen Haftgründen, insbesondere nach Temperaturbeaufschlagung, Klebmasserückstände beobachtet, die auf eine zu geringe Kohäsion der Masse hindeuten.

Die WO 03/018701 A1 offenbart eine selbstklebende Schutzfolie für Oberflächenschutzanwendungen, die eine ein- oder mehrlagige, insbesondere polyolefinische Trägerschicht und eine selbstklebende Schicht aufweist. Die Selbstklebemasse ist folgendermaßen aufgebaut:
- 30 bis 70 Gew.-% eines oder mehrerer Elastomere auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten, sowie
- 30 bis 70 Gew.-% Klebharze, wobei mindestens die Hälfte der Klebharze Flüssigkeitsharze mit einem Erweichungspunkt von unter 25 °C gemessen mit der Ring- und Ball-Methode sind.

In EP 1 388 582 A1 wird eine selbstklebende Schutzfolie offenbart, deren Selbstklebemasse auf einem Polyisobutylen und/oder einem Styrolblockcopolymer basiert. Genauere Angaben zum Polyisobutylentyp oder dessen Molekulargewicht sowie zu Mischungsverhältnissen fehlen. Das suggeriert, dass alle denkbaren Mischungsverhältnisse oder alle Polyisobutylene eine geeignete Selbstklebemasse für eine Oberflächenschutzfolie bilden. Es sind durchaus Mischungsverhältnisse aufzufinden, die zu stark oder zu schwach kleben. Mit bei Raumtemperatur flüssigen Polyisobutylenen kann die Kohäsion zu gering werden, wie oben bereits ausgeführt. Ist der Styrolblockcopolymeranteil zu groß, werden auf empfindlichen Haftgründen wie Lacken irreversible Abdrücke von Falten, Blasen oder den Kanten der Folie beobachtet.

Aufgabe der vorliegenden Erfindung ist es, eine Selbstklebemasse aus hydrierten Blockcopolymeren und eine unter Verwendung dieser hergestellte Schutzfolie zur Verfügung zu stellen, die die Nachteile des Standes der Technik nicht oder nicht in dem Maß aufweist. Insbesondere soll die vorgeschlagene Selbstklebemasse aus hydrierten Blockcopolymeren eine solche Lichtstabilität haben, dass sie insbesondere auf transparenten Trägerfolien verwendbar ist, so dass eine Schutzfolie für glatte Substrate bestehend aus einer transparenten Trägerfolie und der erfindungsgemäßen Selbstklebemasse bereitgestellt werden kann, die nicht das Risiko vorzeitiger lichtbedingter Klebmassezersetzung birgt und gleichzeitig die Vorteile unpolarer, kautschukartiger Selbstklebemassen ausspielt.

Gelöst wird diese Aufgabe durch eine Selbstklebemasse, wie sie im Hauptanspruch niedergelegt ist. Gegenstand der Unteransprüche sind dabei vorteilhafte Weiterbildungen der Selbstklebemasse sowie eine unter der Verwendung dieser hergestellte Schutzfolie.

Demgemäß betrifft die Erfindung eine Selbstklebemasse aus hydrierten Blockcopolymeren oder einer Mischung solcher, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten. Die Selbstklebemasse ist mit 25 bis 100 Gewichtsteilen Polyisobutylen mit einem gewichtsmittleren Molekulargewicht M_{w} > 200 000 g/mol, 3 bis 40 phr (per hundred rubber = bezogen auf die Blockcopolymere) Klebharz sowie 0,1 bis 5 phr Lichtschutzmittel bezogen auf 100 Gewichtsteile der Blockcopolymere abgemischt.

Als Elastomere kommen solche auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren, zur Anwendung, bevorzugt deren hydrierten Abkömmlinge. Sowohl Homo- als auch Copolymerblöcke sind erfindungsgemäß nutzbar. Resultierende Blockcopolymere können gleiche oder unterschiedliche B-Blöcke enthalten. Blockcopolymere können lineare A-B-A Struktur aufweisen, einsetzbar sind ebenfalls Blockcopolymere von radialer Gestalt sowie sternförmige und lineare Multiblockcopolymere. Als weitere Komponenten können A-B Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Anstelle der Polystyrolblöcke können auch Polymerblöcke auf Basis anderer aromatenhaltiger Homo- und Copolymere (bevorzugt C₈- bis C₁₂-Aromaten) mit Glasübergangstemperaturen von > ca. 75 °C genutzt werden, wie zum Beispiel α-methylstyrolhaltige Aromatenblöcke.

Anstelle von hydrierten Styrol-Butadien-Blockcopolymeren und Styrol-Isopren-Blockcopolymeren , mithin Styrol-Ethylen/Butylen-Blockcopolymere und Styrol-Ethylen/Propylen-Blockcopolymere, können erfindungsgemäß ebenfalls Blockcopolymere genutzt werden, welche weitere polydienhaltige Elastomerblöcke nutzen, wie zum Beispiel Copolymere mehrerer unterschiedlicher 1,3-Diene. Erfindungsgemäß nutzbar sind des weiteren funktionalisierte Blockcopolymere, wie zum Beispiel maleinsäureanhydridmodifizierte oder silanmodifizierte Styrolblockcopolymere.

Gemäß einer hervorragenden Ausführungsform der Erfindung sind die Elastomere überwiegend im Mittelblock hydriert, insbesondere aber vollständig im Mittelblock hydriert.

Die Polyisobutylene sind Homopolymere des Isobutens und sind von Natur aus relativ unempfindlich gegen Lichteinfluss, da sie keine ungesättigten Bindungen enthalten. Die Polyisobutylene sind in zahlreichen Molekulargewichten kommerziell erhältlich. Typischerweise werden Polyisobutylene mit gewichtsmittleren Molmassen ab M_{w} = 30 000 g/mol bis hin zu über 4 000 000 g/mol angeboten. Unter einer gewichtsmittleren Molmasse von etwa M_{w} = 200 000 g/mol sind die Polyisobutylene bei Raumtemperatur flüssig, oberhalb kautschukartig. Im letzteren Fall lassen sich diese durch Granulieren in eine gut verarbeitungsfähige Form bringen.
Nur Polyisobutylene mit einer gewichtsmittleren Molmasse von über M_{w} = 200 000 g/mol haben sich als Zusatz zu hydrierten Blockcopolymeren im erfindungsgemäßen Sinn als geeignet herausgestellt, da nur dann die Kohäsion auch unter anspruchsvollen Bedingungen ausreichend ist.

Die Einsatzmenge der Polyisobutylene mit einem gewichtsmittleren Molekulargewicht M_{w} > 200 000 g/mol beträgt 25 bis 100 Gewichtsteile Polyisobutylen bezogen auf 100 Gewichtsteile Blockcopolymer.

Da die genannten Blockcopolymere auch in Mischung mit Polyisobutylenen von Natur aus nur schwach haftklebrig sind, müssen sie für die erfolgreiche Beklebung von raueren Haftgründen und/oder Haftgründen mit geringer Oberflächenspannung (wie etwa Polypropylen) durch die Zugabe von Klebharzen haftklebriger eingestellt werden.

Als Klebrigmacher für die erfindungsgemäße Selbstklebemasse sind Klebharze, insbesondere hydrierte Klebharze geeignet.
Bevorzugt geeignet sind u. a.
• hydrierte Polymerisate des Dicyclopentadiens (zum Beispiel Escorez 5300er Serie; Exxon Chemicals).
• hydrierte Polymerisate von bevorzugt C₈-und C₉-Aromaten (zum Beispiel Regalite und Regalrez Serien; Hercules Inc. // Arkon P Serie; Arakawa), diese können durch Hydrierung von Polymerisaten aus reinen Aromatenströmen entstehen oder auch durch Hydrierung von Polymerisaten auf Basis von Gemischen unterschiedlicher Aromaten entstehen
• teilhydrierte Polymerisate von C₈-und C₉-Aromaten (zum Beispiel Regalite und Regalrez Serien; Hercules Inc. // Arkon M; Arakawa)
• hydrierte Polyterpenharze (zum Beispiel Clearon M; Yasuhara)
• hydrierte C₅/C₉-Polymerisate (zum Beispiel ECR-373; Exxon Chemicals)
• aromatenmodifizierte selektiv hydrierte Dicyclopentadienderivate (zum Beispiel Escorez 5600er Serie; Exxon Chemicals) und/oder
• hydrierte und teilhydrierte kolophoniumbasierende Harze (zum Beispiel Foral, Foralyn; Hercules // Hydrogral; DRT)

Für den Einsatz der erfindungsgemäßen Selbstklebemasse in einer Schutzfolie ohne UV-Belastung können auch unhydrierte allein oder als Abmischkomponenten der hydrierten Klebharze zur Verwendung kommen. Als Oberflächenschutzfolie, die einer UV-Belastung ausgesetzt ist, kommen hauptsächlich hydrierte Kohlenwasserstoffharze zum Einsatz.

Um die Lichtstabilität weiter zu verbessern, sind der Selbstklebemasse Lichtschutzmittel oder andere Stabilisatoren hinzuzufügen, vorrangig wegen der Empfindlichkeit der Harze, selbst wenn diese hydriert sind. Diese sorgen vorrangig für eine Unterbrechung der durch Strahlung oder Wärme induzierten radikalischen Abbauprozesse, besonders unter Einwirkung von Luftsauerstoff, die sowohl die Elastomere als auch das oder die Klebharze betreffen kann.
Derartige Lichtschutzmittel sind bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 beschrieben. Insbesondere HALS-Lichtschutzmittel sind für die erfindungsgemäße Selbstklebemasse geeignet. Die Menge des Lichtschutzmittels bezogen auf die Elastomere beträgt 0,1 bis 5 phr.
Die Lichtstabilität kann durch Verwendung von Antioxidantien (zum Beispiel Irganox 1010 oder Tris-Nonylphenyl-phosphit) noch gesteigert werden, ist aber nicht zwingend notwendig.

Die hydrierten Blockcopolymere und das Polyisobutylen lassen sich in geeigneten Lösungsmitteln wie zum Beispiel Toluol oder Toluol/Benzinmischungen in allen erfindungsgemäßen Mischungsverhältnissen homogen lösen. Diese Lösungen lassen sich auf Trägermaterialien in beliebiger Dicke ausstreichen und durch Einwirkung von erwärmter, bewegter Luft vom Lösemittel befreien.
Die Komponenten der erfindungsgemäßen Selbstklebemasse sind auch lösemittelfrei zum Beispiel in einem Innenmischer oder in aufgeschmolzener Form in geeigneten Aggregaten wie zum Beispiel Extruder oder Compounder mischbar. Sie können auch lösemittelfrei zu einem Film zum Beispiel in Kalandern oder Extrudern mit Breitschlitzdüse ausgeformt und auf die Trägerbahn aufgebracht werden.
Die erfindungsgemäße Selbstklebemasse ist auch geeignet, um in einem Mehrlagencoextrusionsverfahren simultan mit dem Träger zu einem fertigen Oberflächenschutzfilm ausgeformt zu werden.

Allein diese Eigenschaften sprechen dafür, die erfindungsgemäße Klebemasse auf einer Trägerfolie einzusetzen, die letztlich zum Schutz von Oberflächen verwenden lässt.
Der allgemeine Ausdruck "Schutzfolie" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Am häufigsten sind flexible Schutzfolien gewünscht, die sich leicht durch Dehnen an die Konturen der Substrate anpassen. In diesem Fall hat die aus der erfindungsgemäßen Klebmasse hergestellte Schutzfolie einen Träger bevorzugt aus Polyolefinen. Diese können zum Beispiel Polyethylen, Polypropylen sowie deren Mischungen oder Copolymere (zum Beispiel Random-Copolymer oder Polypropylenblockcopolymer) sein.
Zur Einstellung besonderer mechanischer Eigenschaften wie Zähigkeit, Flexibilität, Haftung zum Kleber, Extrusionsverhalten oder besonders glatter Oberflächenstruktur können die Folien auch unterschiedliche Mengen von weiteren Polyolefincopolymeren wie Copolymere aus Ethylen und α-Olefinen wie 1-Buten, 1-Hexen, 1-Octen (je nach Anteil und Herstellungsverfahren LLDPE, VLDPE oder ULDPE oder Metallocen-PE genannt), aber auch Ethylen-Styrol-Copolymere, Ethylen mit polaren Comonomeren wie Acrylsäure oder Vinylacetat und Copolymere des Propylens mit α-Olefinen, etwa Ethylen, 1-Buten, 1-Hexen, 1-Octen enthalten.
Ebenfalls geeignet sind PVC-Folien, insbesondere Weich-PVC Folien.
In einigen Fällen sind dimensionsstabile Schutzfolien gewünscht, die sich beim Aufbringen oder Entfernen nicht verdehnen sollen. Dann kommen Folien aus mono- oder biaxial verstreckten Polyolefinen oder aus Polymeren mit hohem E-Modul wie zum Beispiel Polystyrol, Polycarbonat, Polyamid, Polyester (Polyethylenterephthalat, Polybutylenterephthalat) oder Polymethylmethacrylat zum Einsatz. Vom Erfindungsgedanken umfasst sind auch Folienverbunde aus unterschiedlichen Materialschichten.
In einer vorteilhaften Weiterbildung der Erfindung beträgt die Dicke der Trägerfolie zwischen 20 und 80 µm.
Die Erfindung zielt besonders auf lichtstabile Schutzfolien ab. Um der Trägerfolie die dafür geforderte UV-Stabilität zu geben, ist der Zusatz von Lichtschutzmitteln zu bevorzugen. Die UV-Durchlässigkeit der Schutzfolie sollte im Qellenlängenbereich von 290 bis 360 nm unter 1% liegen. Der Stand des Wissens hierzu ist in den gleichen Quellen zu finden, die schon bei den Lichtschutzmitteln für die Selbstklebemasse genannt wurden. Die Menge des Lichtschutzmittels sollte mindestens 0,15 Gew.-%, vorzugsweise mindestens 0,30 Gew.% bezogen auf die Trägerfolie betragen.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.

Auch wenn die Transparenz häufig gewünscht wird, gibt es Fälle, wo aus Gründen der Erkennbarkeit oder Abschirmung von Licht eine Opazität oder gar Lichtundurchlässigkeit gefordert ist. In diesen Fällen kann der Träger gefüllt sein mit deckenden Füllstoffen wie Titandioxid oder Ruß. Dieser sorgt für eine Blickdichtigkeit und für eine weitere Verbesserung der Lichtstabilität der Trägerfolie.

Um zersetzungskatalytische Metalle abzufangen, können Metalldesaktivatoren, die in die Trägerfolie integriert sind, vorteilhaft sein, darunter Hydrazine und Hydrazide.

Für die optische Gestaltung sind Farbstoffe oder Farbpigmente einzusetzen, auch in Verbindung mit Füllstoffen, um farbige Transparenz, Transluzenz oder deckende Farbigkeit zu erzielen.
Gleitmittel und Antiblockmittel wie Erucamid, Oleamid, Glycerylmonostearat, aber auch Säurefänger wie Calciumstearat und andere Metallseifen können eingesetzt werden, solange sie nicht die Klebeigenschaften der Selbstklebemasse durch Migration oder Übertrag von der Rückseite der Trägerfolie auf die Selbstklebemasse beeinträchtigen.
Zur Verbilligung der Folie oder zur Erzielung besonderer Eigenschaften können auch andere Füllstoffe wie Kreide oder Talkum eingesetzt werden.

Die Herstellung der bevorzugten Polyolefinfolien erfolgt mit den einschlägig bekannten Verfahren wie dem Chillrollverfahren, bei dem die aus einer Breitschlitzdüse austretende Schmelze auf eine Kühlwalze gegossen wird, auf der die Schmelze zu einem Film erstarrt. Weiterhin verbreitet ist das Blasfolienverfahren, bei dem die Schmelze schlauchförmig aus einer Ringdüse austritt und mehr oder weniger stark aufgeblasen wird, um die gewünschten Dimensionen (Dicke und Durchmesser des Schlauches zu erzielen.

Wenn nötig, kann die Verankerung der Selbstklebemasse auf der Trägerfolie durch eine Beschichtung mit einem Primer oder einer Haftvermittlerschicht als Verankerungshilfe verbessert werden. Dazu kann auch eine Corona- oder eine Flammvorbehandlung der zu beschichtenden Folienseite dienen.

Auf der Rückseite der Schutzfolie kann, wenn nötig, ein Rückseitenlack aufgetragen sein, um die Abrolleigenschaften der zur archimedischen Spirale gewickelten Schutzfolie günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein.
Im Falle der Mehrlagencoextrusion ist es vorteilhaft, die das Trennmittel enthaltende Schicht mit dem Gesamtaufbau zu coextrudieren.

Die erfindungsgemäße Selbstklebemasse zeichnet sich durch eine gute Anfangshaftkraft sowohl auf glatten oder glänzenden, besonders aber auf rauen und strukturierten Untergründen aus. Dabei erhöht sich die Haftkraft im Laufe der Lagerung über längere Zeit, auch unter erhöhter Temperatur in einem geringen Maß.
Die daraus hergestellte Schutzfolie zeigt selbst in Verbindung mit einer lichtdurchlässigen Trägerfolie eine gute Lichtbeständigkeit über Monate. Sie lässt sich auch nach Einwirkung von Wärme und Sonnenlicht rückstandsfrei und leicht vom Haftgrund ablösen. Dabei erfährt der Haftgrund keine Veränderung des Aussehens wie Vergilbung, Veränderung des Glanzgrades oder Quellungen.

Aufgrund der unerwarteten positiven Eigenschaften lässt sich die Selbstklebemasse in einer Schutzfolie verwenden, die auf frisch lackierten Oberflächen von Fahrzeugen wie Automobilen oder Automobilteilen als Montage- oder Transportschutz eingesetzt werden kann oder auch zum Schutz von glatten und rauen Lack-, Metall-, Kunststoff- oder Glasoberflächen.

Die erfindungsgemäße Selbstklebemasse und die daraus hergestellten Oberflächenschutzfolien werden nachfolgend in bevorzugter Ausführung anhand mehrerer Beispiele beschrieben, ohne damit ebenfalls die Erfindung irgendeiner Beschränkung unterwerfen zu wollen.
Des Weiteren sind Vergleichsbeispiele aufgeführt, in denen untaugliche Selbstklebemassen und daraus hergestellte Schutzfolien dargestellt sind.

### Beispiele

Alle Selbstklebemassen für die Mustererstellung wurden durch Einwiegen der Massekomponenten und durch Auflösen im Lösemittel Toluol in einer Feststoffkonzentration von 20 % präpariert. Die Selbstklebemassen wurden mit Hilfe einer Laborstreichmaschine auf einer Corona-vorbehandelten 50 µm dicken, farblostransparenten LDPE-Folie, lichtstabilisiert mit 0,2 % Chimassorb 944 (Poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]], ein HALS-Lichtstabilisator der Firma CIBA), in einer solchen Schichtstärke ausgestrichen, dass nach der Trocknung in einem Trockenschrank über 4 Minuten bei 95 °C ein Klebmasseauftrag von 10 g/m² resultierte. Nach dem Abkühlen wurden die Muster mit einer siliconisierten Trennfolie abgedeckt und nach frühestens 48 Stunden Wartezeit in 20 mm breite Streifen geschnitten. Mit diesen Streifen wurden die Prüfungen gemäß untenstehender Beschreibung durchgeführt.

### Beurteilungskriterien

Die Kriterien für eine anwendungsgerechte Selbstklebemasse für Oberflächenschutzfolien sind
- ausreichende Soforthaftung
- ein moderater Anstieg der Klebkraft nach Temperaturbelastung
- ein moderater Anstieg der Klebkraft und rückstandsfrei Entfernbarkeit nach UV-Belastung
- keine Oberflächenveränderungen nach dem Demaskieren.

### Diese werden im Folgenden näher erläutert:

### Soforthaftung

Eine ausreichende Soforthaftung auf dem zu schützenden Haftgrund muss gegeben sein, damit die Oberflächenschutzfolie einfach auszubringen ist und von Anfang an sicher haftet. Ein Maß hierfür ist die Sofortklebkraft, also die Kraft, die notwendig ist, um die Oberflächenschutzfolie direkt nach dem Aufbringen wieder vom Haftgrund abzuziehen.

### Aufziehverhalten

Damit der zu schützende Haftgrund leicht wieder zu demaskieren ist, darf die selbstklebende Oberflächenschutzfolie nicht zu stark aufziehen, das heißt, die Differenz zwischen der Schälkraft nach langer Verklebungszeit und der Sofortklebkraft darf nicht zu groß sein. Dies ist umso wichtiger, als dass Oberflächenschutzfolien häufig in großen Abmessungen eingesetzt werden und damit der Kraftaufwand zum Demaskieren erheblich sein kann.

### Oberflächenveränderung

Eine Oberflächenschutzfolie soll den Haftgrund vor Beschädigungen oder Verschmutzungen schützen, darf diesen aber selbst nicht verändern.
Verfärbungen und irreversible Deformationen der Oberfläche als Abdruck von eingeklebten Falten oder Folienstrukturen sind ebenso unerwünscht wie Klebmasserückstände und Beläge.

### UV-Beständigkeit

Durch die Einwirkung von UV-Licht auf die selbstklebende Oberflächenschutzfolie dürfen weder der Träger spröde werden und beim Demaskieren reißen noch die Kohäsion der Selbstklebemasse derart geschädigt werden, dass es zu Rückständen auf dem Haftgrund kommt.

### Durchführung der Prüfungen und Beurteilungsschemata

Die streifenförmig geschnittenen Muster wurden auf verschiedene repräsentative Haftgründe aufgebracht und die Klebkraft sofort und nach unterschiedlichen Beanspruchungen mit Hilfe einer Zugprüfmaschine ermittelt.
Ein besonderes Augenmerk lag dabei auf der Beurteilung des Haftgrundes nach dem Demaskieren.

### Soforthaftung

Die Messung der Soforthaftung erfolgte in Anlehnung an die Klebkraftmessmethode ASTM D3330 auf glatten Prüfplatten hergestellt aus Polycarbonat (PC), nichtweichgemachtem Polyvinylchlorid (PVC), Acrylnitrilbutadienstyrolcopolymer (ABS), Fensterglas (Glas) und einkomponentigem Polyurethanlack (1K PU-Lack). Der Abzugswinkel betrug 180°, die Abzugsgeschwindigkeit 300 mm/min. Gemessen wurde die Klebkraft innerhalb von fünf Minuten nach dem Aufkleben.
Als gut wurde eine Soforthaftung von mindestens 0,2 N/cm bewertet.

### Aufziehverhalten

Eine lange Verklebungszeit wurde durch eine Wärmebelastung der auf den Haftgründen verklebten Muster bei erhöhter Temperatur von 80 °C über sechs Tage simuliert. Nach dem Abkühlen der wärmebelasteten Muster auf Raumtemperatur wurde die Schälkraft in Anlehnung an die Klebkraftmessmethode ASTM D3330 gemessen.
Das Aufziehverhalten (Δ) wird berechnet als Differenz von Schälkraft nach Wärmebelastung und Soforthaftung.
Als gut wurde ein Anstieg der Schälkraft um maximal 1 N/cm bewertet.
Unabhängig vom Aufziehverhalten wurde eine Schälkraft nach Wärmebelastung von über 2 N/cm negativ bewertet.

### Soforthaftung

Nach dem Abziehen der wärmebelasteten Muster wurde der ehemals beklebte Bereich visuell begutachtet.
Die Beurteilung war positiv (in Ordnung, i.O.), wenn keine sichtbaren Veränderungen des Haftgrundes erkennbar waren.

### UV-Beständigkeit

Die UV-Beständigkeit wurde durch Bestrahlung mit UV Licht in dem Bewitterungsgerät QUV/SE der Firma Q-PANEL getestet. Die Strahlungsleistung betrug 0,92 W/m²/nm, die mit dem Lampentyp UVA-340 erreicht wurde. Die Beregnungseinheit war für diesen Test nicht in Betrieb.
Es wurden in regelmäßigen Abständen von ca. 24 Stunden die Muster demaskiert und dabei der Haftgrund auf Rückstände als Zeichen beginnender Kohäsionsschwäche visuell untersucht.
Die Muster wurden als ausreichend UV-stabil bewertet, wenn nach mindestens 400 h UV Belastung keine Klebmasserückstände erkennbar waren.

### Molekulargewichtsbestimmung

Die Molekulargewichtsbestimmungen der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen PMMA-Standards gemessen.

### Rezepturen der Beispiele und Gegenbeispiele

Gemäß der Erfindung bestehen die zur Veranschaulichung der Erfindung ausgewählten Selbstklebemassen aus hydrierten Blockcopolymeren und Polyisobutylenen. Die Zahlen in den Beispielen und Gegenbeispielen geben die Gewichtsteile der Komponenten in der Formulierung an. M_{w} bezeichnet das gewichtsmittlere Molekulargewicht. KW-Harz bezeichnet ein Kohlenwasserstoffharz.

### Beispiele

| **Stoffart** | **Type** | **B-1** | **B-2** | **B-3** |
|---|---|---|---|---|
| SEPS | Septon 2063 (Kuraray) | 100 | | |
| SEBS | G-1657 (Kraton) | | 100 | 100 |
| PIB (M_{w}= 340.000 g/mol) | Oppanol B50 (BASF) | 100 | 100 | 100 |
| PIB (M_{w}= 36.000 g/mol) | Oppanol B10 (BASF) | | | |
| Kolophoniumharz, vollhydriert | Regalite R1090 (Eastman) | 35 | 35 | |
| KW-Harz, vollhydriert | Foral 85E (Eastman) | | | 35 |
| Lichtschutzmittel HALS-Typ | Tinuvin 622 (Ciba) | 1 | 1 | 1 |

Bei Septon 2063 handelt es sich um ein SEPS mit einem Styrengehalt von 13 Gew.-% sowie mit einem mittleren Molekulargewicht M_{w} von 65.000.
Das Kraton G-1657 ist ein SEBS mit ebenfalls 13 Gew.% Styrengehalt, einem Diblockgehalt von 30% und einem mittleren Molekulargewicht M_{w} von 100.000.

### Gegenbeispiele

| **Stoffart** | **Type** | **G-1** | **G-2** | **G-3** | **G-4** |
|---|---|---|---|---|---|
| SEPS | Septon 2063 (Kuraray) | | | | |
| SEBS | G-1657 (Kraton) | 100 | 100 | 100 | 100 |
| PIB (M_{w}= 340.000 g/mol) | Oppanol B50 (BASF) | | 200 | | 100 |
| PIB (M_{w}= 36.000 g/mol) | Oppanol B10 (BASF) | | | 100 | |
| Kolophoniumharz, vollhydriert | Regalite R1090 (Eastman) | | 53 | 35 | |
| KW-Harz, vollhydriert | Foral 85E (Eastman) | 18 | | | 35 |
| Lichtschutzmittel HALS-Typ | Tinuvin 622 (Ciba) | 0,5 | 1,5 | 1 | |

### Testergebnisse

### Beispiele

| **Haftgrund** | **B-1** | **B-2** | **B-3** |
|---|---|---|---|
| *Soforthaftung (in N*/*cm)* | | | |
| PC | 1,2. | 1,3 | 1,3 |
| PVC | 1,3 | 1,5 | 1,1 |
| ABS | 0,8 | 0,9 | 0,8 |
| Glas | 1,2 | 1,4 | 1,4 |
| 1 K-PU Lack | 0,8 | 0,9 | 0,9 |
| Eloxal | 0,3 | 0,3 | 0,4 |
| PE | 0,2 | 0,2 | 0,3 |

| *Klebkraft nach Wärmebelastung (in Nlcm)* | | | |
|---|---|---|---|
| PC | 1,7 | 1,9 | 1,8 |
| PVC | 1,8 | 1,8 | 1,3 |
| ABS | 1,7 | 1,8 | 1,7 |
| Glas | 0,8 | 0,9 | 0,5 |
| 1K-PU Lack | 1,4 | 1,5 | 1,5 |
| Eloxal | 1,2 | 1,2 | 1,2 |
| PE | 0,3 | 0,3 | 0,4 |

| *Aufziehverhalten* Δ *(in N*/*cm)* | | | |
|---|---|---|---|
| PC | 0,5 | 0,6 | 0,5 |
| PVC | 0,5 | 0,3 | 0,2 |
| ABS | 0,9 | 0,9 | 0,9 |
| Glas | -0,4 | -0,5 | -0,9 |
| 1 K-PU Lack | 0,6 | 0,6 | 0,6 |
| Eloxal | 0.9 | 0,9 | 0,8 |
| PE | 0,1 | 0,1 | 0,1 |

| *Oberflächenbeurteilung nach Wärmebelastung* | | | |
|---|---|---|---|
| PC | i.O. | i.O. | i.O. |
| PVC | i.O. | i.O. | i.O. |
| ABS | i.O. | i.O. | i.O. |
| Glas | i.O. | i.O. | i.O. |
| 1 K-PU Lack | i.O. | i.O. | i.O. |
| Eloxal | i.O. | i.O. | i.O. |
| PE | i.O. | i.O. | i.O. |

| *UV-Beständigkeit (Zeit bis zum Auftreten von Rückständen in Stunden)* | | | |
|---|---|---|---|
| Glas | 663 | 781 | 541 |

### Gegenbeispiele

| **Haftgrund** | **G-1** | **G-2** | **G-3** | **G-4** |
|---|---|---|---|---|
| *Soforthaftung (in Nlcm)* | | | | |
| PC | 0,7 | 1,6 | 1,8 | 1,3 |
| PVC | 0,6 | 1,5 | 1,7 | 1,1 |
| ABS | 0,5 | 1,6 | 1,5 | 0,8 |
| Glas | 0,4 | 1,6 | 1,5 | 1,4 |
| 1K-PU Lack | 0,4 | 1,2 | 1,1 | 1,0 |
| Eloxal | 0,0 | 0,3 | 0,3 | 0,4 |
| PE | 0,0 | 0,2 | 0,3 | 0,2 |

| *Klebkraft nach Wärmebelastung (in N*/*cm)* | | | | |
|---|---|---|---|---|
| PC | 2,1 | 2,7 | 2,7 | 1,9 |
| PVC | 1,5 | 2,1 | 2,3 | 1,3 |
| ABS | 1,7 | 2,9 | 3,0 | 1,9 |
| Glas | 0,6 | 1,9 | 2,5 | 0,4 |
| 1K-PU Lack | 1,5 | 2,0 | 2,4 | 1,5 |
| Eloxal | 0,7 | 1,7 | 1,9 | 1,2 |
| PE | 0,5 | 1,1 | 1,2 | 0,4 |

| *Aufziehverhalten* Δ *(in Nlcm)* | | | | |
|---|---|---|---|---|
| PC | 1,4 | 1,1 | 0,9 | 0,6 |
| PVC | 0,9 | 0,6 | 0,6 | 0,2 |
| ABS | 1,2 | 1,3 | 1,5 | 1,1 |
| Glas | 0,2 | 0,3 | 1,0 | -1,0 |
| 1 K-PU Lack | 1,1 | 0,8 | 1,3 | 0,5 |
| Eloxal | 0,7 | 1,4 | 1,6 | 0,8 |
| PE | 0,5 | 0,9 | 0,9 | 0,2 |

| *Oberflächenbeurteilung nach Wärmebelastung* | | | | |
|---|---|---|---|---|
| PC | i.O. | MR | MR | i.O. |
| PVC | i.O. | MR | MR | i.O. |
| ABS | i.O. | MR | MR | i.O. |
| Glas | i.O. | i.O. | i.O. | i.O. |
| 1 K-PU Lack | D | i.O. | B | i.O. |
| Eloxal | i.O. | i.O. | MR | i.O. |
| PE | i.O. | i.O. | MR | i.O. |

| *UV-Beständigkeit (Zeit bis zum Auftreten von Rückständen in Stunden)* | | | | |
|---|---|---|---|---|
| Glas | 663 | 493 | 137 | 112 |

### Abkürzungen:

| | |
|---|---|
| i.O. = | keine sichtbare Veränderung der Oberfläche |
| B = | Belag auf dem Haftgrund |
| MR = | Klebmasserückstände |
| D = | Deformation des Haftgrundes |

Die Beispiele B-1, B-2 und B-3 zeigen ein anwendungsgerechtes Eigenschaftsprofil, indem sie eine ausreichende Sofortklebkraft von zum Teil deutlich über 0,2 N/cm und nach Temperaturlagerung ein moderates Aufziehen zeigen. Ein Wert von 2 N/cm wird nicht überschritten. Die Oberflächen der Haftgründe haben sich durch die Temperaturlagerung nicht verändert, das Demaskieren war rückstandsfrei möglich. Die UV-Beständigkeit ist mit weit über 400 Stunden deutlich über der Eignungsgrenze. Im Beispiel B-2 wirkt sich die Verwendung eines vollhydrierten Kohlenwasserstoffharzes und des Elastomers auf Basis Styrol-Ethylen/Butylen-Blockcopolymer positiv auf die UV-Beständigkeit aus.

Das Gegenbeispiel G-1 ohne Verwendung von Polyisobutylen und nur mit Styrol-Ethylen/Butylen-Blockcopolymer und Harz zeigt eine zu geringe Klebkraft auf Oberflächen mit geringer Oberflächenspannung wie PE und auf matt strukturierten Oberflächen wie eloxiertem Aluminium (Eloxal). Trotz geringer Sofortklebkräfte sind die Klebkräfte nach Wärmelagerung recht hoch, dieses Muster zeigt also ein ausgeprägtes Aufziehverhalten. Weiterhin wurde durch dieses Muster der empfindliche Haftgrund Lack irreversibel deformiert.

Im Gegenbeispiel G-2 wurde der Polyisobutylenanteil verdoppelt und damit außerhalb der als bevorzugt erkannten Obergrenze verschoben. Durch den erhöhten Anteil an Polyisobutylen wird die Kohäsion geschwächt. Es kommt zu Klebmasserückständen auf etlichen Haftgründen. Die Klebkräfte nach Wärmelagerung liegen weit über 2 N/cm und damit oberhalb der definierten Grenze für die geforderte leichte Demaskierbarkeit.

Das Gegenbeispiel G-3 mit niedermolekularem Polyisobutylen (Oppanol B10) zeigt ein starkes Aufziehen auf polaren Haftgründen sowie erhebliche Klebmasserückstände nach dem Demaskieren. Die Kohäsion dieser P|B Type mit geringerem Molekulargewicht ist nicht ausreichend. Dies wird auch in der geringen UV-Stabilität deutlich. Weiterhin treten Beläge auf dem Haftgrund Lack auf.

Im Gegenbeispiel G-4 wurde der UV-Stabilisator weggelassen. Soforthaftung und Aufziehverhalten sind in Ordnung. Ohne Stabilisierung ist die Beständigkeit unter UV-Belastung unter dem Limit und erfüllt nicht die Anforderungen an Lichtbeständigkeit.

## Patentansprüche

1. Selbstklebemasse aus hydrierten Blockcopolymeren oder einer Mischung solcher, enthaltend Polymerblöcke gebildet von Vinylaromaten (A-Blöcke) und solchen gebildet durch Polymerisation von 1,3-Dienen (B-Blöcke), wobei die Selbstklebemasse mit 25 bis 100 Gewichtsteilen, bezogen auf 100 Gewichststeile Blockcopolymer, Polyisobutylen mit einem gewichtsmittleren Molekulargewicht M_{w} > 200 000 g/mol, 3 bis 40 phr (per hundred rubber = bezogen auf die Blockcopolymere) Klebharz sowie 0,1 bis 5 phr Lichtschutzmittel bezogen auf 100 Gewichtsteile der Blockcopolymere abgemischt ist.

2. Selbstklebemasse nach Anspruch 1, **dadurch gekennzeichnet, dass**
die Vinylaromaten Styrol sind oder auf C₈- bis C₁₂-Aromaten basieren, insbesondere auf α-methylstyrolhaltigen Aromatenblöcke.

3. Selbstklebemasse nach den Ansprüchen 1 oder 2, **dadurch gekennzeichnet, dass**
die B-Blöcke durch Polymerisation von Butadien und Isopren beziehungsweise deren Hydrierungsprodukten oder durch Polymerisation von Isobutylen gebildet werden.

4. Selbstklebemasse nach zumindest einem der Ansprüche 1 bis 3, **dadurch gekennzeichnet, dass**
die Blockcopolymere überwiegend, insbesondere vollständig im Mittelblock hydriert sind.

5. Selbstklebemasse nach zumindest einem der vorherigen Ansprüche, **dadurch gekennzeichnet, dass**
die Klebharze gewählt sind aus der Gruppe
• hydrierte Polymerisate des Dicyclopentadiens
• hydrierte Polymerisate von bevorzugt C₈-und C₉-Aromaten die durch Hydrierung von Polymerisaten aus reinen Aromatenströmen oder auch durch Hydrierung von Polymerisaten auf Basis von Gemischen unterschiedlicher Aromaten entstehen
• teilhydrierte Polymerisate von C₈-und C₉-Aromaten
• hydrierte Polyterpenharze
• hydrierte C₅/C₉-Polymerisate
• aromatenmodifizierte selektiv hydrierte Dicyclopentadienderivate und/oder
• hydrierte und teilhydrierte kolophoniumbasierende Harze

6. Verwendung der Selbstklebemasse nach mindestens einem der vorhergehenden Ansprüche in einer Schutzfolie, indem die Selbstklebemasse zumindest einseitig auf eine Trägerfolie aufgebracht wird.

7. Verwendung der Selbstklebemasse nach Anspruch 6, **dadurch gekennzeichnet, dass** die Trägerfolie eine Polyolefinfolie ist.

8. Verwendung der Selbstklebemasse nach den Ansprüchen 6 oder 7, **dadurch gekennzeichnet, dass**
die Dicke der Trägerfolie zwischen 20 und 80 µm beträgt, gegebenenfalls einschließlich einer Haftvermittlerschicht, die zwischen der Trägerschicht und der Selbstklebemasse angeordnet ist.

9. Verwendung der Selbstklebemasse nach zumindest einem der Ansprüche 6 bis 8, **dadurch gekennzeichnet, dass**
die Trägerfolie mindestens ein Lichtschutzmittel in einer Menge von mindestens 0,15 Gew.-% enthält.

10. Verwendung der Selbstklebemasse nach zumindest einem der Ansprüche 6 bis 9, **dadurch gekennzeichnet, dass**
die UV-Durchlässigkeit der Schutzfolie im Wellenlängenbereich von 290 bis 360 nm unter 1 % liegt.

11. Verwendung einer Schutzfolie nach zumindest einem der Ansprüche 6 bis 10 auf frisch lackierten Oberflächen von Fahrzeugen wie Automobilen oder Automobilteilen als Montage- oder Transportschutz.

12. Verwendung einer Schutzfolie nach zumindest einem der Ansprüche 6 bis 11 zum Schutz von glatten und rauen Lack-, Metall-, Kunststoff- oder Glasoberflächen.

13. Verfahren zur Herstellung einer selbstklebenden Schutzfolie nach zumindest einem der vorhergehenden Ansprüche durch simultane Coextrusion von Selbstklebemasse, Trägerschicht sowie gegebenenfalls weiteren Hilfsschichten.

## Claims

1. Self-adhesive composition comprising hydrogenated block copolymers or a mixture of such, comprising polymer blocks formed from vinylaromatics (A blocks) and polymer blocks formed by polymerization of 1,3-dienes (B blocks), the self-adhesive composition being blended with 25 to 100 parts by weight, based on 100 parts by weight of block copolymer, of polyisobutylene having a weight-average molecular weight M_{w} > 200 000 g/mol, 3 to 40 phr (per hundred rubber = based on the block copolymers) of tackifier resin, and 0.1 to 5 phr of light stabilizer, based on 100 parts by weight of the block copolymers.

2. Self-adhesive composition according to Claim 1, **characterized in that** the vinylaromatics are styrene or are based on C₈ to C₁₂ aromatics, in particular on α-methylstyrene-containing aromatic blocks.

3. Self-adhesive composition according to Claim 1 or 2, **characterized in that** the B blocks are formed by polymerization of butadiene and isoprene and/or their hydrogenation products or by polymerization of isobutylene.

4. Self-adhesive composition according to at least one of Claims 1 to 3, **characterized in that** the block copolymers are hydrogenated predominantly, in particular completely in the middle block.

5. Self-adhesive composition according to at least one of the preceding claims, **characterized in that** the tackifier resins are selected from the group consisting of
• hydrogenated polymers of dicyclopentadiene
• hydrogenated polymers of preferably C₈ and C₉ aromatics which are formed by hydrogenating polymers comprising pure aromatics streams or else by hydrogenating polymers based on mixtures of different aromatics
• partially hydrogenated polymers of C₈ and C₉ aromatics
• hydrogenated polyterpene resins
• hydrogenated C₅/C₉ polymers
• aromatics-modified, selectively hydrogenated dicyclopentadiene derivatives and/or
• hydrogenated and partially hydrogenated rosin-based resins.

6. Use of the self-adhesive composition according to at least one of the preceding claims in a protective film, the self-adhesive composition being applied to at least one side of a carrier film.

7. Use of the self-adhesive composition according to Claim 6, **characterized in that** the carrier film is a polyolefin film.

8. Use of the self-adhesive composition according to Claim 6 or 7, **characterized in that** the thickness of the carrier film is between 20 and 80 µm, if appropriate including an adhesion promoter layer which is disposed between the carrier layer and the self-adhesive composition.

9. Use of the self-adhesive composition according to at least one of Claims 6 to 8, **characterized in that** the carrier film comprises at least one light stabilizer in an amount of at least 0.15% by weight.

10. Use of the self-adhesive composition according to at least one of Claims 6 to 9, **characterized in that** the UV transmittance of the protective film in the wavelength range from 290 to 360 nm is below 1%.

11. Use of a protective film according to at least one of Claims 6 to 10 on freshly painted surfaces of vehicles such as automobiles or automobile parts as assembly protection or transit protection.

12. Use of a protective film according to at least one of Claims 6 to 11 for protecting smooth and rough paint, metal, plastic or glass surfaces.

13. Process for producing a self-adhesive protective film according to at least one of the preceding claims by simultaneous coextrusion of self-adhesive composition, carrier layer, and, if appropriate, further, auxiliary layers.

## Revendications

1. Masse autoadhésive en copolymères à blocs hydrogénés ou un mélange de ceux-ci, contenant des blocs polymères formés par des aromatiques de vinyle (blocs A) et des blocs formés par polymérisation de 1,3-diènes (blocs B), la masse autoadhésive étant mélangée avec 25 à 100 parties en poids, par rapport à 100 parties en poids de copolymère à blocs, de polyisobutylène présentant un poids moléculaire numérique moyen M_{w} > 200 000 g/mole, 3 à 40 phr (per hundred rubber = parties par cent parties de caoutchouc = par rapport aux copolymères à blocs) de résine adhésive ainsi que 0,1 à 5 phr d'agent de protection contre la lumière par rapport à 100 parties en poids des copolymères à blocs.

2. Masse autoadhésive selon la revendication 1, **caractérisée en ce que** les aromatiques de vinyle sont le styrène ou sont à base d'aromatiques en C₈ à C₁₂, en particulier à base de blocs d'aromatiques contenant de l'α-méthylstyrène.

3. Masse autoadhésive selon les revendications 1 ou 2, **caractérisée en ce que** les blocs B sont formés par polymérisation de butadiène et d'isoprène ou leurs produits d'hydrogénation ou par polymérisation d'isobutylène.

4. Masse autoadhésive selon au moins l'une quelconque des revendications 1 à 3, **caractérisée en ce que** les copolymères à blocs sont principalement, en particulier complètement hydrogénés dans le bloc central.

5. Masse autoadhésive selon au moins l'une quelconque des revendications précédentes, **caractérisée en ce que** les résines adhésives sont choisies dans le groupe formé par
- les polymères hydrogénés du dicyclopentadiène
- les polymères hydrogénés de préférence d'aromatiques en C₈ et C₉ par hydrogénation de polymères provenant de flux d'aromatiques purs ou également par hydrogénation de polymères à base de mélanges d'aromatiques différents
- les polymères partiellement hydrogénés d'aromatiques en C₈ et C₉
- les résines polyterpéniques hydrogénées
- les polymères en C₅/C₉ hydrogénés
- les dérivés de dicyclopentadiène modifiés par des aromatiques, hydrogénés sélectivement et/ou
- les résines hydrogénées et partiellement hydrogénées à base de colophonium.

6. Utilisation de la masse autoadhésive selon au moins l'une quelconque des revendications précédentes dans une feuille de protection, en ce que la masse autoadhésive est appliquée au moins sur une face sur une feuille support.

7. Utilisation de la masse autoadhésive selon la revendication 6, **caractérisée en ce que** la feuille support est une feuille polyoléfinique.

8. Utilisation de la masse autoadhésive selon les revendications 6 ou 7, **caractérisée en ce que** l'épaisseur de la feuille support est comprise entre 20 et 80 µm, le cas échéant y compris une couche de promoteur d'adhérence, qui est agencée entre la couche support et la masse autoadhésive.

9. Utilisation de la masse autoadhésive selon au moins l'une quelconque des revendications 6 à 8, **caractérisée en ce que** la feuille support contient au moins un agent de protection contre la lumière en une quantité d'au moins 0,15% en poids.

10. Utilisation de la masse autoadhésive selon au moins l'une quelconque des revendications 6 à 9, **caractérisée en ce que** la perméabilité aux UV de la feuille support dans la plage de longueurs d'onde de 290 à 360 nm est inférieure à 1%.

11. Utilisation d'une feuille de protection selon au moins l'une quelconque des revendications 6 à 10 sur des surfaces fraîchement laquées de véhicules tels que des automobiles ou des pièces pour automobiles, comme protection lors du montage ou du transport.

12. Utilisation d'une feuille de protection selon au moins l'une quelconque des revendications 6 à 11 pour la protection de surfaces en laque, métal, matériau synthétique ou verre, lisses et rugueuses.

13. Procédé pour la préparation d'une feuille de protection autoadhésive selon au moins l'une quelconque des revendications précédentes, par coextrusion simultanée d'une masse autoadhésive, d'une couche support ainsi que le cas échéant d'autres couches auxiliaires.
